# EUROPEAN PATENT SPECIFICATION

(11) **EP 4 265 532 B1**
(45) Date of publication and mention of the grant of the patent: **24.07.2024**
(21) Application number: 23168468.9
(22) Date of filing: 18.04.2023
(51) Int. Cl.: B65B 25/06, A22C 25/18, A22C 17/00, B65B 57/10

(54) **TUNA CANNING MACHINE WITH AUTOMATIC QUALITY CONTROL**
THUNFISCHKONSERVENMASCHINE MIT AUTOMATISCHER QUALITÄTSKONTROLLE
MACHINE DE MISE EN CONSERVE DU THON AVEC CONTRÔLE AUTOMATIQUE DE LA QUALITÉ

(30) Priority: 19.04.2022 ES 202230353
(43) Date of publication of application: 25.10.2023
(73) Proprietor: Hermasa Canning Technology S.A., 36314 Vigo (ES)
(72) Inventor: Rodríguez Cordovés, Pablo, 36314 Vigo (ES)
(74) Representative: Clarke, Modet y Cía., S.L.

(56) References cited:
- WO-A1-2010/142570
- WO-A1-2016/150956
- US-A- 3 800 363
- US-A- 4 847 954
- US-A1- 2003 097 819

## Description

### TECHNICAL FIELD OF THE INVENTION

The invention belongs to the field of tuna processing, and more specifically to quality control systems for tuna packaging.

### BACKGROUND OF THE INVENTION OR STATE OF THE ART

In industrial processing of tuna and other pelagic species, the use of canning equipment is widely used. There are different types of tuna canning or packing machines and pelagic species, where operators manually feed the machine with tuna blocks (in the form of loins, pieces and/or crumbs). The equipment then compacts the blocks, cuts them into portions and feeds the portions into the cans, at production rates of 200 to 500 cans per minute.

In the state of the art there is a plurality of disclosures directed to equipment and machines related to fish canning and specifically tuna canning and pelagic species, among which is the patent document ES 2119608 B1 that teaches a movement system actuated by toothed wheels and a gearmotor with frequency converter.

On the other hand, patent document ES 2351318 B1 discloses a machine that uses tuna blocks, automating the feeding of raw material to the canning machine.

Document EP2204324 A1 discloses a machine that generates tuna advancement with a conveyor belt, and with rotary compaction chambers, equipped with a load cell to measure the compaction force. Document US 2003097819 A1 discloses an apparatus for automatically packaging fish at high speeds into horizontally oriented cans using discharge pistons that move downwardly.

However, currently existing canning machines have the drawback that they do not incorporate an automated quality control of the tuna cans produced.

### BRIEF DESCRIPTION OF THE INVENTION

The present invention refers to a tuna canning machine that solves the problems of the state of the art, by incorporating an automatic quality control of the tuna cans produced.

In particular, the tuna canning machine of the present invention advantageously allows to dynamically self-adjust the height of the canned tuna portions. For this, the machine includes a pusher configured to insert the tuna portions into the cans according to an adjustable pressure and path, and an artificial vision system configured to measure the height of the canned tuna portions, commissioning a control unit for dynamically adjusting the height of the canned tuna portions by controlling the pressure and path of the pusher based on the height measurements of the canned tuna portions.

The path and pressure of the pusher is increased or reduced depending on the average height of the tuna in the can and/or the existence of skirts on the outer perimeter of the tuna pill, obtained by means of the artificial vision system. The self-adjustment of the path and pressure of the pusher is done dynamically in real time, according to the height measurements made by the artificial vision system.

The height measurements are preferably carried out by a 3D laser profile sensor, which is responsible for measuring the average height of the tuna pill in the can, the level of uniformity on the surface and/or the existence or not of tuna skirts on the sides of the can. In the event that at least some of these measured characteristics are not desired, the control unit will automatically take action on the path of the pusher and the pressure it exerts on the tuna pill when it is inserted into the can. In one embodiment, the artificial vision system is configured to calculate an average height of the canned tuna portions and the control unit is configured to adjust the average height of the canned tuna portions by controlling the pressure and the path of the pusher.

Additionally, the machine also allows self-adjusting of the fill weight continuously and in real time during production in order to improve the accuracy of the average packing weight with respect to a desired target packing weight. For this, the machine includes an advancing conveyor system (including one or more conveyor bands) for the tuna blocks configured to move the compacted tuna blocks towards the nozzle by means of an intermittent advancement controlled by a servomotor, and the control unit It is configured to dynamically adjust canned tuna portion weights relative to a target packing weight by controlling the advancement of the advancing conveyor system. Advancement refers to the distance (e.g., in mm) that the feeder conveyor system must advance at each intermittent movement. Each of these advancements corresponds to the filling of a can with tuna, and therefore has an impact on the size of the tuna section that is inserted into the can. The height of the product in the can will depend, first of all, on the distance traveled by the conveyor belt in each advancement. The greater the distance, the larger section of tuna is introduced into the can. The control unit collects the weights of all the cans manufactured, obtained by a dynamic weigher, and progressively calculates the average fill weight obtained, so that when a weight higher or lower than the target fill weight is detected, the control unit automatically modifies the length of the advancement applied to the servomotor that controls the advancing conveyor system based on the difference with the desired target weight (e.g., proportionally to said difference), increasing the advancement if the difference with the target weight is negative or decreasing the advancement if the difference is positive, thus achieving that the distribution of filling weights is precisely centered on the target weight value. The new advancement value may be calculated by applying an empirical conversion factor to transform the weight difference in grams into an advancement value in mm. For advancement control the control unit may use a proportional controller or another type (e.g., a PID controller).

The machine can also incorporate an automatic rejection system for cans with defects. The artificial vision system incorporates a color camera that captures images of the canned tuna portions. The artificial vision system is configured to detect defects in the canned tuna portions by analyzing the images captured by the color camera and/or by analyzing the height measurements made by the laser profile sensor, and the control unit sends the cans with defects to a reject line. The rejection or acceptance of the cans can be determined according to compliance with quality standards in the appearance of the can packaging with respect to some minimum requirements, which include the detection of tuna dark meat, dark areas, foreign objects, holes in the tuna or the presence of raw material in the closure zone. For the minimum requirements, different quality parameters may be used, such as:
- Average height of the tuna pill.
- Maximum height of the tuna on the outer perimeter of the pill to detect possible skirts on the edges of the pill.
- Minimum accepted height (to detect possible holes in the tuna).
- Difference between minimum and maximum heights of the pill to measure the level of homogeneity on the surface.
- Maximum accepted percentage of surface with dark areas and surface with tuna dark meat or coagulated blood.
- The percentage of surface with tuna dark meat or with dark areas, or the presence of foreign objects. Through the image captures provided by the camera, an artificial vision algorithm may detect these parameters (for example, through the differences in the levels of the red component of each pixel).
- The presence of product on the outside of the can that prevents its sealing.

With the quality parameters calculated, the control unit can compare them with some objective values and reject or not the can depending on compliance with them. For example, in terms of the measured heights, the control unit may calculate the differences between the measured heights and the objective values, rejecting the can if they do not comply with what is established (for example, if the difference exceeds a certain threshold).

### BRIEF DESCRIPTION OF THE FIGURES

Then, a series of drawings that help to better understand the invention and that are expressly related to an embodiment of said invention that is presented as a non-limiting example thereof, is briefly described.
Figure 1 shows an example of a tuna canning machine according to one embodiment.
Figures 2A, 2B, 2C, 2D and 2E show, respectively, a perspective view, a front perspective, an elevation view, a front view, and a plan view of a tuna canning machine according to a possible embodiment.
Figure 3 shows, according to a possible embodiment, a tuna canning machine with the casing that covers the withdrawal density control system.
Figure 4 represents a simplified diagram of the elements that the tuna canning machine incorporates according to one embodiment.
Figure 5 shows the set of transporters used to control tuna density.
Figures 6A-6C show different views of a treader installed in the machine.
Figure 7 illustrates a set of tuna advancing conveyors, according to one embodiment.
Figure 8 shows, according to one embodiment, the tuna mass displacement system.
Figure 9 presents an embodiment of non-split side bands, used in the tuna mass displacement system.
Figure 10 represents the advancement of the tuna from the advancing bands towards the nozzle.
Figures 11A-11C represent different views of a nozzle used in the machine, according to one embodiment.
Figures 12A-12B show a jig knife used to divide the tuna mass that runs through the nozzle of the previous figure into two parts.
Figures 13A-13C show the star assembly with antechambers (Figure 13A), without antechambers (Figure 13B) and the operation of the star assembly during the filling process of the can with tuna (Figure 13C).
Figures 14A-14D illustrate the pusher system according to one embodiment.
Figures 15A-15C show the blow system on the pusher according to one embodiment.
Figure 16 represents an example of an indexer-reducer assembly used on the machine.
Figure 17 shows an example of an artificial vision system.
Figures 18A-18B illustrate the tuna dark meat detection process using a color camera.
Figures 19A-19E show different examples of packing profiles obtained by the laser profile sensor.
Figure 20 shows a 3D can profile generated by superimposing profiles.
Figures 21A-21C show, according to different embodiments, a schematic diagram of the inlets and outlets of the control unit.

### DETAILED DESCRIPTION OF THE INVENTION

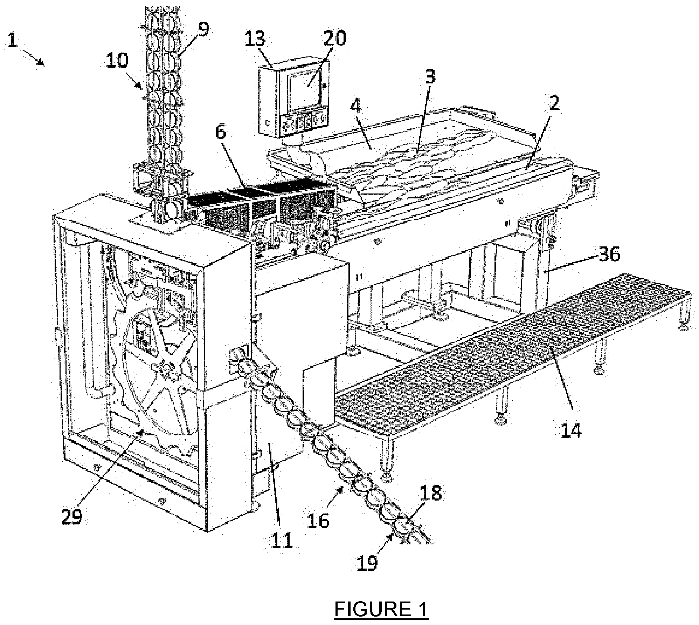

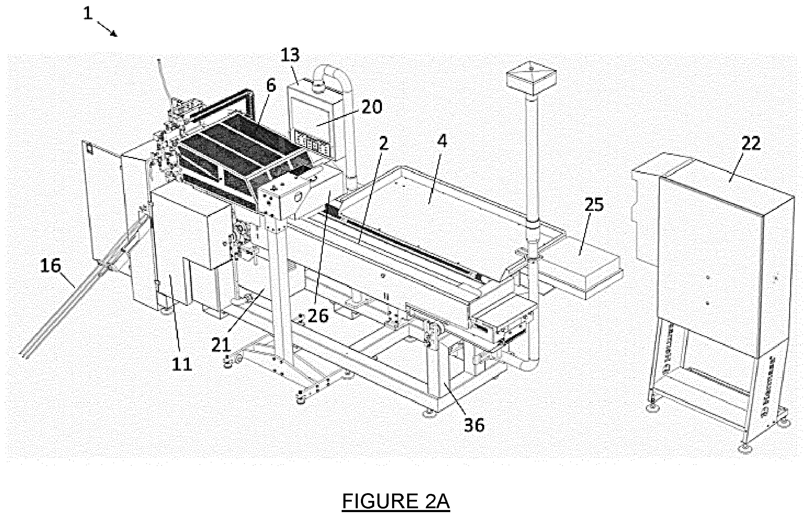

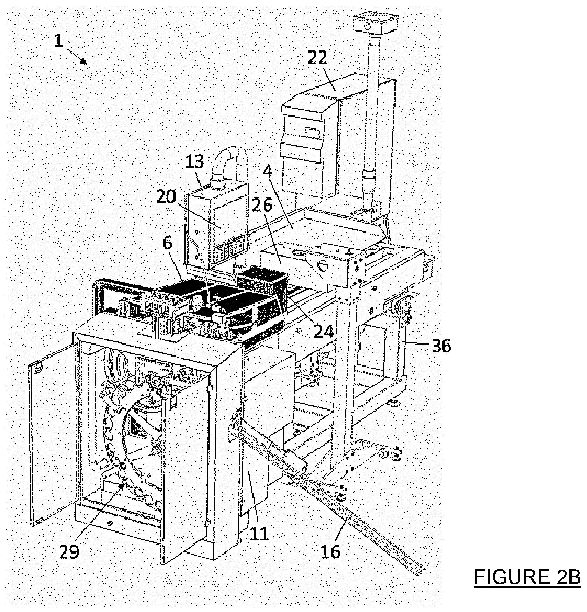

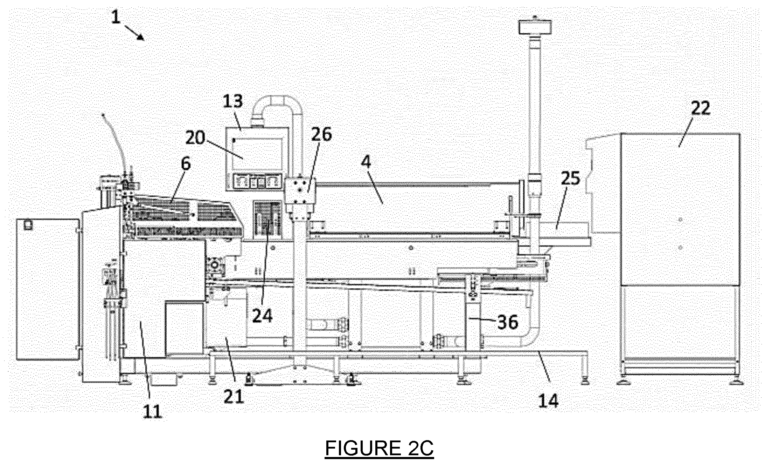

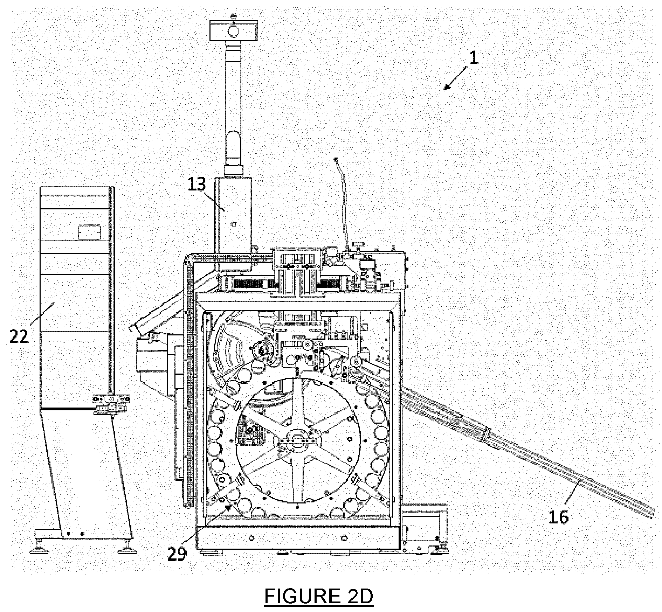

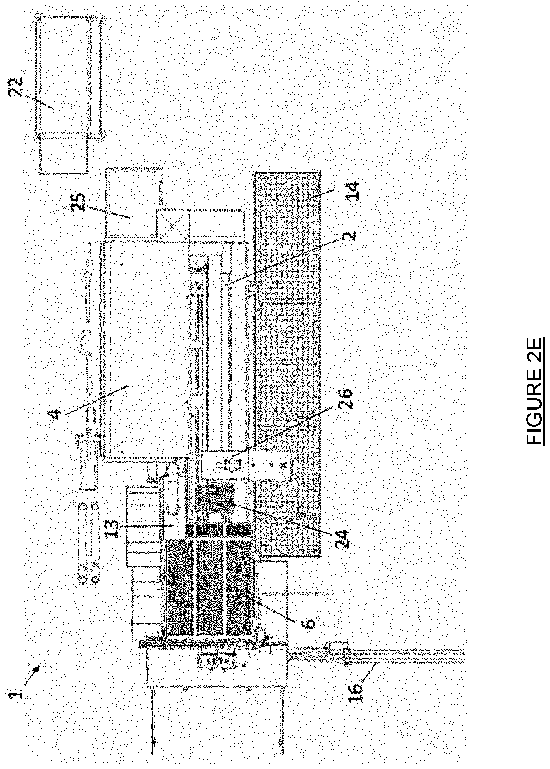

**Figure 1** shows a perspective view of a tuna canning machine 1 with quality control in operation, according to a possible embodiment of the present invention, in which a dynamic control of the height of the tuna pills in the cans is performed. Figures 2A-E show different views of a tuna canning machine 1 similar to the one in Figure 1, but stopped, without representing the feeding system of empty cans or tuna blocks.

The tuna canning machine 1 comprises a feeding conveyor system 2 responsible for receiving and transporting tuna blocks 3 in the form of loins, pieces and/or crumbs. The tuna blocks 3 are manually deposited in a fish reception tray 4, and later they are transferred to the feeding conveyor system 2. Although in the example represented in the figures the feeding of tuna to the machine is done manually, tuna canning machine 1 may incorporate an automatic tuna feeding system.

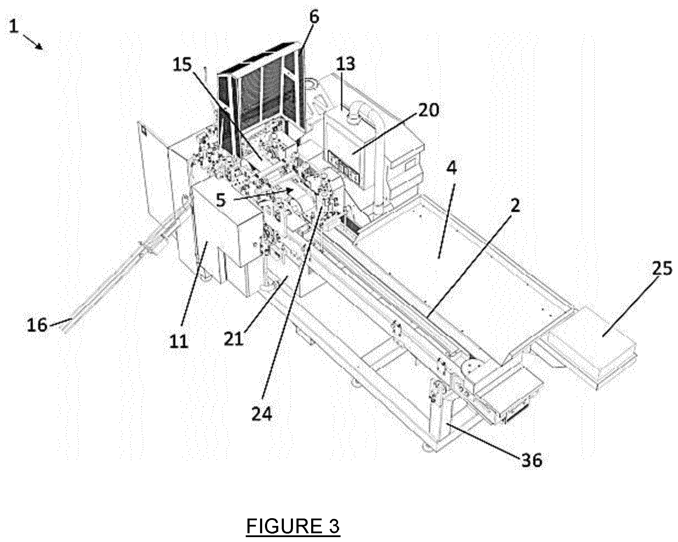

Tuna blocks 3 are compacted by a density control system 5, protected by a casing 6. In **Figure 3****,** the machine is shown stopped with the casing 6 removed, where the density control system 5 is seen.

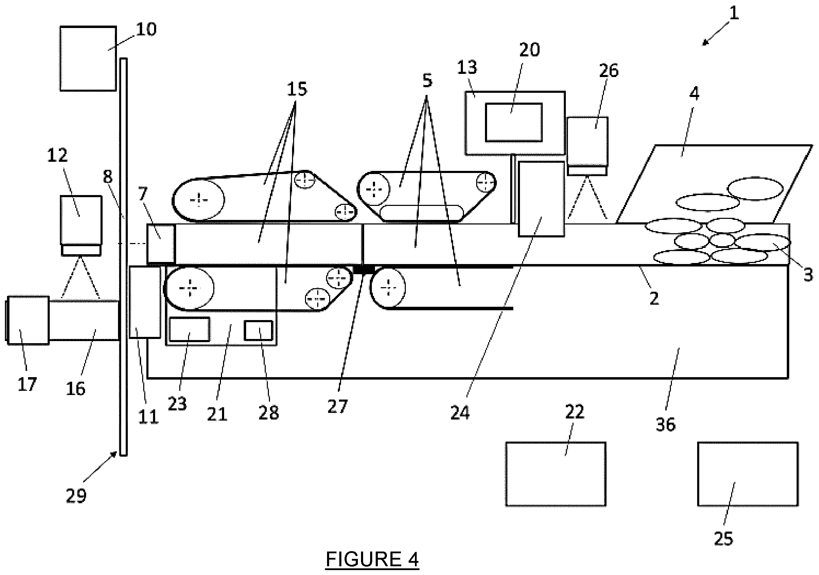

Once compacted, the tuna blocks 3 pass through a nozzle configured to form the tuna blocks 3 with a certain shape adapted to the empty cans. In **Figure 4****,** a schematic side view is shown with the elements of the tuna canning machine 1, in which the nozzle 7 may be seen. A cutting device 8 is in charge of cutting the shaped tuna blocks to obtain tuna portions or pills. In one embodiment, the cutting device is implemented by means of a rotating blade, which cuts at the mouth of the nozzle 7 in order to introduce the portions resulting from the cut into empty cans 9.

A feeding system of empty cans 10 supplies empty cans 9 to the machine (for example, by means of a coupling consisting of a lowering section of rods), which are positioned facing the tuna portions. A pusher, which is part of a pusher system 11, introduces the tuna portions into the empty cans according to an adjustable pressure and path.

Next, an artificial vision system 12 makes height measurements of the canned tuna portions, and a control unit 13 receives these measurements and is in charge of dynamically adjusting the height of the canned tuna portions by controlling the pusher pressure and path. The adjustment of the pressure and path of the pusher is carried out based on the height measurements of the canned tuna portions. For example, in case of detecting an insufficient height of tuna in the can, which gives a negative appearance to the consumer when opening the can, the control unit proceeds to reduce the pressure and the path of the pusher by a certain amount depending on the tuna height to be corrected, thus increasing the height of the tuna in the can until an acceptable tuna height in the can is obtained. The tuna height control process in the can may be carried out repetitively, in a closed loop, for example by means of a proportional controller or a PID controller that acts as a function of the error with respect to a target height.

In one embodiment, the tuna canning machine 1 may comprise an additional quality control, and specifically a dynamic control of the filling weights of the cans. To this end, the tuna canning machine 1 comprises an advancing conveyor system 15 for the tuna blocks, an outlet conveyor system 16, and a dynamic weigher 17. The advancing conveyor system 15 is in charge of moving the compacted tuna blocks towards the nozzle 7 by means of an intermittent start and stop movement, which generates an intermittent advancement, preferably controlled by a servomotor.

The outlet conveyor system 16 receives and transports the filled cans 19 (that is, the cans that already include the canned tuna portions 18 inside and that remain open, have not yet been sealed with the upper lid) to the dynamic weigher 17, which is in charge of weighing them in motion, individually. For its part, the control unit 13 is configured to dynamically adjust the weight of the canned tuna portions 18 with respect to a target packaging weight by controlling the intermittent start and stop movement (advancement control) of the advancing conveyor system. The corrected advancement is an outlet from the control unit 13, and is the result of the adjustment calculated automatically starting from the weights obtained from the dynamic weigher 17. For example, in case of detection of an insufficient weight of tuna in the can, which may be a cause of rejection of the product, the control unit 13 would control the servomotor of the advancing conveyor system 15 to increase the advancement distance of the compacted tuna blocks at each activation of the servomotor, thus increasing the volume of the tuna portions and, therefore, their weight.

Figures 1 to 4, which illustrate an example of embodiment that should not be considered as limiting, show other elements that the tuna canning machine 1 may incorporate, the functionality of which will be explained below:
- Work platform 14.
- Bench or supporting structure 36.
- Touch screen 20, integrated in the control unit 13.
- Indexer-reducer assembly 21.
- Electrical panel 22.
- Pneumatic panel 23.
- Treader 24.
- Inlet weigher 25.
- NIR sensor 26.
- Temperature sensor 27.
- Vibration sensor 28.
- Star assembly 29.

Work platform 14 is arranged along the product loading area and on top of it are the operators who manually load the tuna blocks 3 into the machine. The bench or supporting structure 36 is the base structure of the machine, with height adjustment for its leveling and for the absorption of possible vibrations during operation. The tuna canning machine 1 incorporates an inlet weigher 25 to weigh the tuna blocks 3 that are introduced into the packing machine. The inlet weigher 25 can be implemented, for example, by means of a scale (manual weighing of the boxes containing the tuna blocks 3 before depositing them in the fish reception tray 4) or by means of a dynamic weigher located at the entrance (automatic weighing of the tuna blocks in the packing machine itself feeding conveyor system 2, or immediately before).

When depositing the tuna blocks 3 in the feeding conveyor system 2, it is important that there are no free holes, since if the blocks (e.g., loins) are very large and there are free holes between them, inefficiencies can be generated in the weight of the packed product in cans.

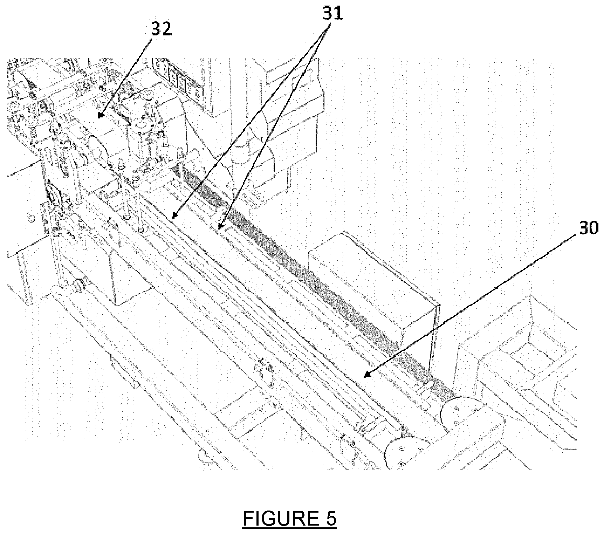

In any case, the density control system 5, optionally aided by the treader 24, is in charge of controlling and homogenizing the density of the tuna, trying to distribute the tuna on the bands in a more homogeneous way and reduce the possible holes that could be found. The density control system 5 can be implemented by means of a set of conveyors, as shown in detail in **Figure 5****.** In the embodiment shown in said figure, the density control system 5 comprises four plastic belt conveyors that are in charge of moving the tuna blocks 3 deposited manually at the entrance of the machine.

The assembly of tuna density control conveyors is composed of a lower conveyor (density control lower band 30) that supports the weight of tuna blocks 3, two side conveyors (density control side bands 31) and an upper conveyor (density control upper band 32), which define a volume on which the compaction of the tuna blocks 3 is carried out. These conveyors perform a variable speed movement and are driven by a servomotor, which controls the speed and torque of the motor to apply a certain force on the tuna blocks, thus compacting them and obtaining as uniform a density as possible. Speed and torque control may be done by a PID controller.

In the embodiment shown in the figures, the lower conveyor, and the side conveyors of the density control system 5 extend to the fish reception tray 4, therefore performing the functions of the feeding conveyor system 2 that receives and transports the tuna blocks to the entrance of the machine. In another embodiment, the feeding conveyor system 2 is implemented by one or several conveyors independent of the density control system 5.

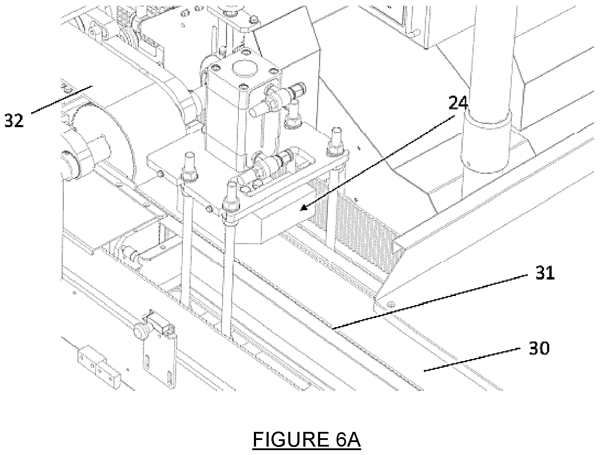

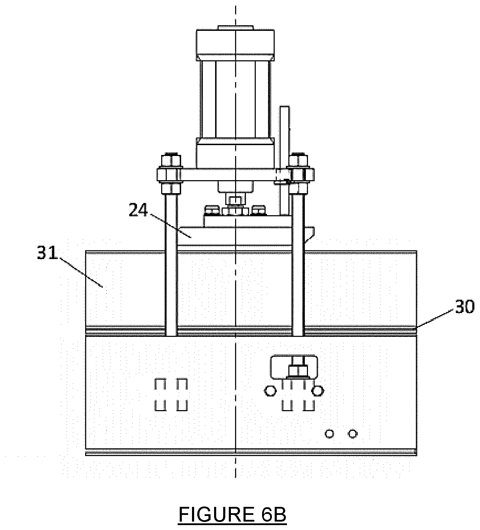

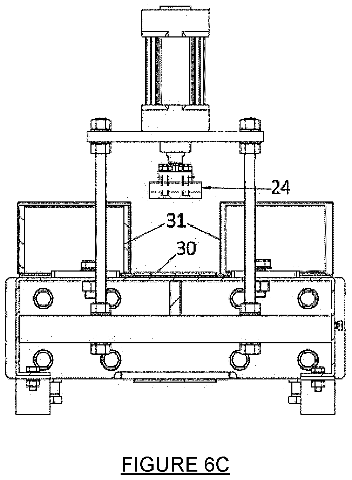

The machine can optionally include a treader 24, represented in **Figures 6A** (perspective view), **6B** (side view) and **6C** (front view). This element is installed in the tuna density control area, before the density control upper band 32 and has the function of better redistributing the tuna in the entry channel delimited by the side bands 31 and the lower band 30 of density control, trying to cover possible holes that exist between the loins or pieces of tuna and adapting the tuna mass to the shape of the channel, which will facilitate the subsequent compaction of the tuna carried out by the density control bands (30,31,32). The treader 24 works in a vertical reciprocating motion and should tread the tuna blocks 3 (downward motion) only when the density control bands (30,31,32) are stopped or at a low speed, to avoid disturbing the density control made by these bands. The frequency and cycle time (often making a downward movement and with what speed) are configurable by the user on the touch screen 20 of the control unit 13. In the embodiment shown in Figures 6A-6C, the treader 24 is a pneumatic treader that works with compressed air, although it could be of another type (controlled, for example, by an electric motor).

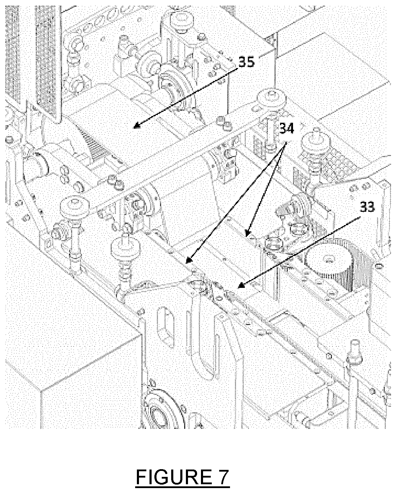

The advancing conveyor system 15 is in charge of advancing the compacted tuna blocks 3 towards the nozzle 7. In the embodiment shown in the **Figure 7** the advancing conveyor system 15 is made up of four conveyors (advancing lower band 33, advancing side bands 34 and upper advancing band 35) that receive the compacted product from the density control bands (30,31,32). Its movement, intermittent, is governed by another servomotor. The time interval between two advancements will depend on the production rate selected at each moment (cans/minute). Thus, in each movement, the band will advance a certain length, which will depend on the amount of tuna that must be introduced into the can. Each advancement corresponds to the manufacture of a can. The control of the advancement of the advancing conveyor bands (33,34,35) may be carried out by means of a PID controller.

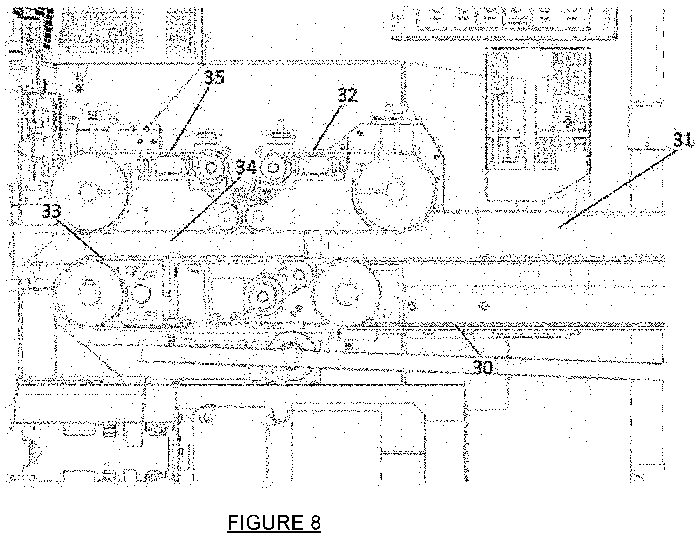

In the **Figure 8** a side view of the sets of density control conveyors (30,31,32) and of advancement (33,34,35) is illustrated, where the two upper conveyors (32,35), the two lower conveyors (30,32) and the side bands (31,34) on the right side of the machine (the side conveyors on the left side of the machine are hidden in this view). Figure 8 thus represents the tuna movement system throughout the packing machine, formed by the two sets of defined conveyors.

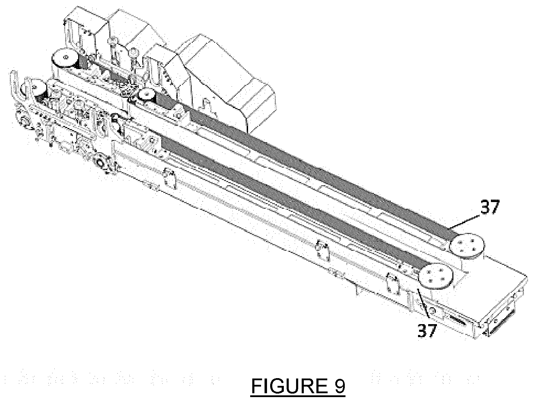

In the embodiment shown in Figure 8 the side bands (31, 34) are separate, i.e., the advancing side band 34 and the density control side band 31 are independent. In another embodiment, these side bands may be joined into two single side bands 37, as shown in **Figure 9****,** shared between the advancing conveyor set and the density control conveyor set.

A PLC of the machine controls the servomotors of the two sets of conveyors and the synchronization between them, regulating the advancement of each portion or tuna pill, and the density of the tuna by controlling the torque of the density control servomotor. Both systems are independent, and there is no coordination between them; however, the very behavior of the tuna mass means that when it advances, the density of the tuna inside the channel decreases and, therefore, the torque controller must act, creating compression in the channel.

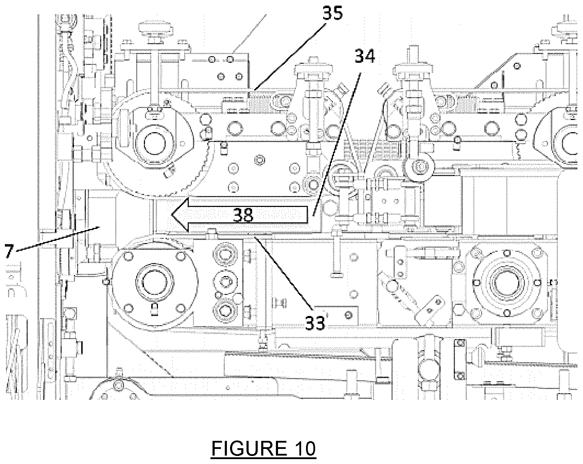

The nozzle 7 is in charge of receiving the compacted tuna from the advancing bands and shaping it to introduce it into the can. The **Figure 10** shows, in a side view, the advancement 38 of the compacted tuna mass from the advancing bands (33,34,35) towards the nozzle 7, where it passes from a rectangular shape of the channel formed by the advancing bands themselves to the shape of the can (e.g., rounded).

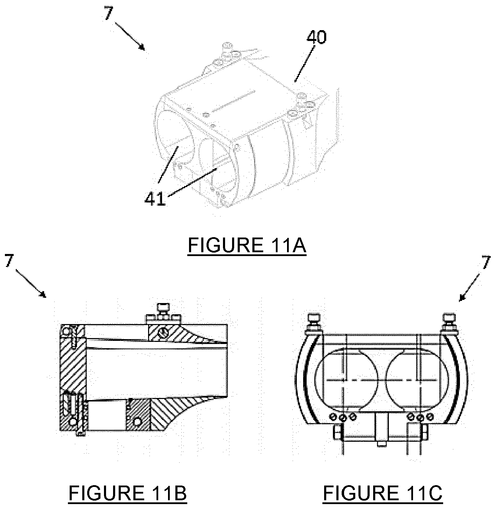

In **Figures 11A, 11B** and **11C** by way of example, different views of a nozzle 7 are shown (perspective view, longitudinal section and front view, respectively). There are many different nozzles, with different dimensions and conicity. The nozzle 7 to be used in each production is selected depending on the product to be manufactured and the type of packaging machine, being able to have two outlet orifices in the nozzle 7, as in the example of the figures, or a single orifice. The conicity of the nozzle 7 is a relevant parameter, since a compression of the tuna mass is produced and because the tuna is not pulled by the conveyors on its path through the nozzle.

For this reason, the design of the nozzle 7 is optimized to achieve a suitable flow of the tuna, so that the flow lines are smooth, and the positioning efforts are homogenized. The tuna advances under pressure of the mass of tuna behind it. The compacted tuna mass advances a defined amount (advancing length of the advancing conveyor system 15), transmitted to the tuna mass by the four advancing conveyors (33,34,35). The mass protruding from the nozzle 7 at each advancement is cut by the cutting device 8, implemented in one embodiment by means of a circular blade. Nozzle 7 must not apply back pressure to advancement or modify the density achieved by density control system 5.

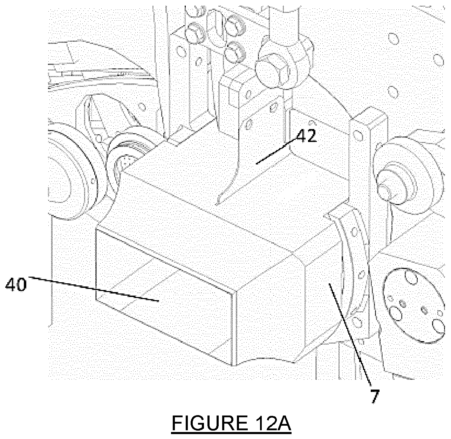

In the example shown in the figures, the nozzle 7 has a rectangular inlet 40 (where the tuna mass enters) and circular outlet orifices 41 (where the tuna mass exits), a double circle; therefore, the tuna block is divided into two circles so that two empty cans are fed at the same time. To facilitate this division, a jig knife 42 **(****Figure 12A****)** that acts vertically dividing the tuna channel into two parts, entering from above in the middle of the nozzle 7. The movement of the jig knife 42 must be regulated so that the cut occurs when the tuna block, inside the channel, is stopped.

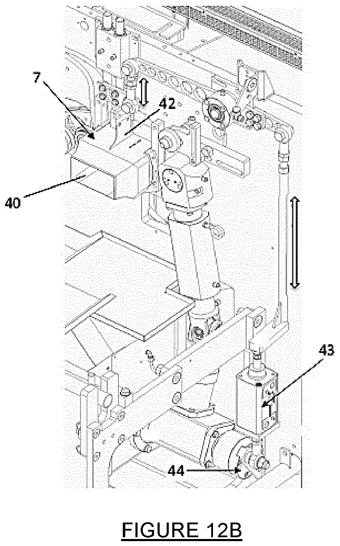

The jig knife 42 receives its movement from an outlet of the indexer-reducer assembly 21, and is mechanically connected with a shaft geared to the indexer. In **Figure 12B** the elements involved in the movement of the jig knife 42 are represented, including a security cylinder 43 and a rotary movement 44 transmitted by the indexer-reducer assembly 21.

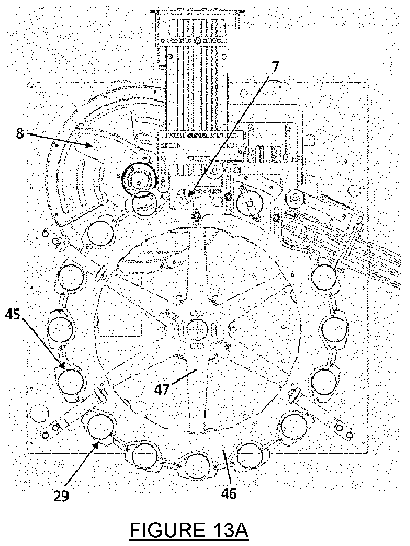

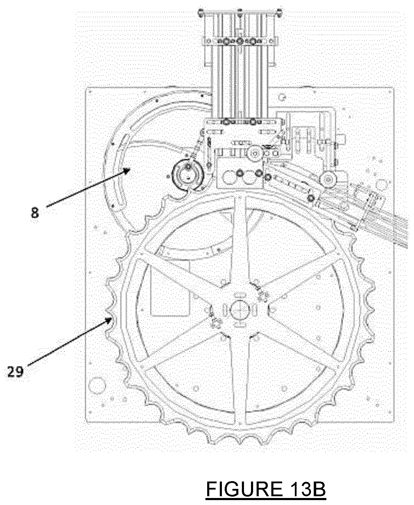

In **Figures 13A-13B****,** embodiments of star assembly 29 are shown, with (Figure 13A) or without (Figure 13B) antechambers. The star assembly includes the star 46 and the star holder 47, which is the metallic piece used to anchor the star 46 and transmit the rotation from the axis. This assembly has an intermittent circular movement, transmitted by the indexer-reducer assembly 21, and is responsible for the correct positioning of the empty cans 9 in front of the nozzle 7 for the introduction of the tuna into the can and, subsequently, the positioning of the can in front of the pusher to move the tuna towards the bottom of the can. Simultaneously with the positioning of the empty cans 9 in front of the nozzle 7, the rotating blade 8 performs a cutting function to obtain the tuna portions.

The empty cans 9 from the feeding system of empty cans 10 fall onto the star assembly 29. Optionally, the star assembly 29 can also support antechambers 45, which house the tuna pill before it is inserted into the empty can 9. The shaped tuna block that comes out of the nozzle 7 is housed and supported in the antechamber 45, so that the rotating blade passes between the nozzle 7 and the antechamber 45, cutting the shaped tuna block, leaving the portion of tuna housed in this way in the antechamber 45. The antechambers 45 are therefore rings that hold the tuna portion or pill once cut, and move it by rotating in front of the empty can 9, which also rotates on the star 46 until the pusher introduces the pill into the empty can 9. Star 46 and the antechambers 45 are integral and rotate together. The function of antechambers 45 is to allow a firm support for the tuna during the cutting of the rotating blade. An example of a star assembly 29 with antechambers 45 is shown in Figure 13A and in Figure 13B without antechambers.

Star assembly 29 is in charge of carrying out the synchronized movements transmitted by the indexer-reducer assembly 21, to move the cans and, where appropriate, the antechambers. Also shown in Figure 13A is the rotating blade 8, which is in charge of making the cut in the mouth of the nozzle 7 to be able to introduce the tuna portions or pills into the empty cans 9, and the nozzle 7 that receives the compacted tuna from the advancing bands and shapes it to introduce it into the empty can 9.

The process carried out in this area of the machine is detailed below, comprising from the moment the tuna is inside the nozzle 7 until the can, with tuna inside, leaves through the outlet conveyor system 16:
1. In the first place, there is a continuous feeding of empty cans 9 through the upper part of the machine, in vertical fall (by means of two feeding channels, in the case represented in Figure 1) towards the area where the nozzle 7 is located, the empty cans confronted with the circular outlet orifices 41 of the nozzle 7, through which the tuna that reaches this point will exit from the advancing bands.
2. At the moment in which the advancing conveyors are stopped, it is the moment in which the section of tuna protruding from the nozzle 7 is cut. There is a blade position detector, which gives the order to move the advancing bands, and which is coordinated with the cut of the tuna pill. When this position sensor detects the cutting circular blade, it sends the movement signal of the advancing bands to the advancing servomotor, thus allowing the tuna to advance.
3. Once the product pill is inside the can, already cut, the star assembly 29 rotates corresponding to the angular distance between two consecutive orifices (e.g., 22,5 degrees when star assembly 29 has 16 orifices). During the rotation of the star assembly 29, the filled can (or filled cans, in the event that the filling of cans is carried out two by two) is displaced and empty cans 9 are reloaded.
4. The cans filled with tuna, after turning 22,5 degrees, are pushed by the pusher, which, through its reciprocating linear movement, drives the product (the tuna portion or pill) towards the bottom of the can.
5. Once the tuna portion reaches the bottom of the can, pushed by the pusher, and before the pusher starts to move back, an additional injection of air and/or steam can be carried out, in order to ensure that the pusher base (the contact front end of the pusher) lifts off the pill and the pill remains in the bottom of the can.
6. The cans that have already passed in front of the pusher rotate again another 22,5 degrees, fall on a bayonet, and leave the machine, through a turner to position themselves face up, finishing the packaging process.

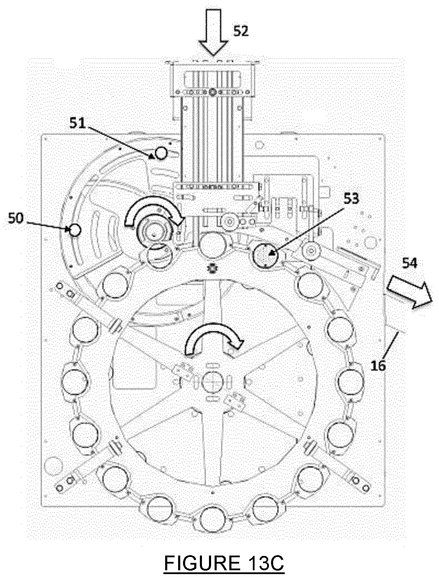

In **Figure 13C****,** the different elements involved in this process can be seen: product advancing detector 50, can blow order detector 51, empty can inlet 52, pusher base 53, which pushes the tuna towards the bottom of the can, and the outlet of cans filled with tuna 54 towards the outlet conveyor system 16.

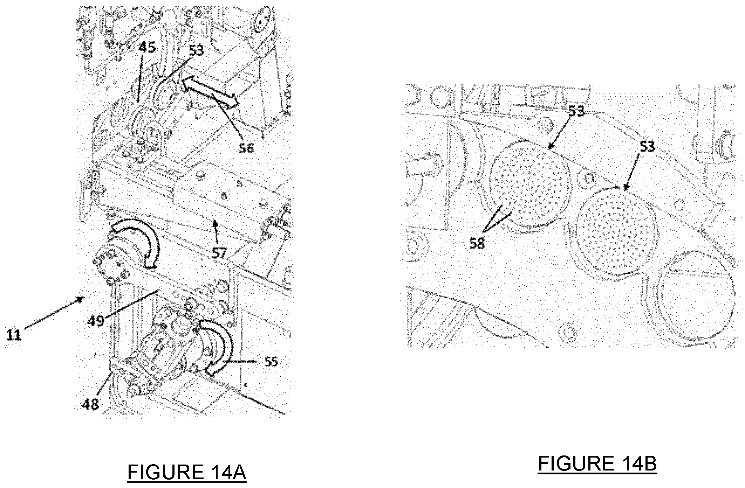

In **Figures 14A-14D****,** details of the pusher system 11 are shown, according to a possible embodiment. This element intervenes in the process by which tuna is introduced into the empty can. It is the system in charge of positioning the tuna pill at the bottom of the can, pushing it, and receives the movement of one of the outlet shafts of the indexer-reducer assembly 21. By means of an eccentric, a linear movement synchronized with the position of the empty cans is achieved, with the aim of positioning the product pill at the bottom of the can. Likewise, it exerts an adjustable pressure on the product, which influences the finish and the quality of the final product.

In **Figure 14A****,** the rotary movement 55 of the pusher system 11 (coming from an outlet shaft of the indexer-reducer assembly 21) and the rectilinear movement 56 of the pusher 57 are shown. The pusher 57 is the final part of the pusher system 11 that performs a linear movement to introduce the tuna into the can, with adjustable pressure and path. A piston or pusher with adjustable path allows the tuna portion to move to the bottom of the empty can 9 with a higher or lower path distance. The force or pressure exerted by the piston or pusher is regulated by a pressure or torque modification system. For example, in the embodiment shown in Figure 14A the path can be regulated by moving screws along a slider 48, and the moment or torque (whose effect on the pusher would be equivalent to pusher pressure) is regulated by adjustment of a screw in an arm 49 (locating the screw at a more or less distance from the center of rotation of the arm 49 increasing or decreasing the torque exerted by the rotary movement 55 coming from the indexer-reducer assembly 21). However, this embodiment shown in Figure 14A is an example, the design of the pusher system 11 may change.

The pusher base 53, which is the part of the pusher 57 that comes into contact with the tuna pill and pushes it, is preferably perforated to allow the passage of steam/air, as illustrated in the **Figure 14B****,** which represents a view of the pusher base 53 from a frontal position of the machine (in this case the pusher base is double, since two cans are filled each time). Since the pusher base 53 is the pusher element 57 through which the pusher contacts the tuna portion, the pusher base 53 is preferably adapted to the shape and size of the can. For example, if the can is circular, the pusher base is also circular and adapted to the size of the can (e.g., with a diameter close to the inside diameter of the top edge of the can). The pusher base 53 has perforations 58 made through which a blowing system of the machine can inject air and/or steam at the start of the return movement of the pusher 57.

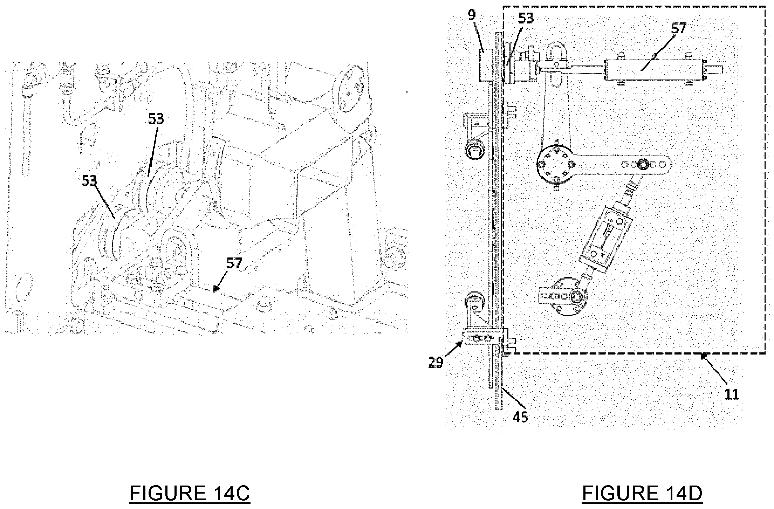

In **Figure 14C****,** the pusher base 53 (double) is shown in perspective from a rear position. Figure 14D shows a profile view of the pusher system 11 and the star assembly 29 with antechambers 45.

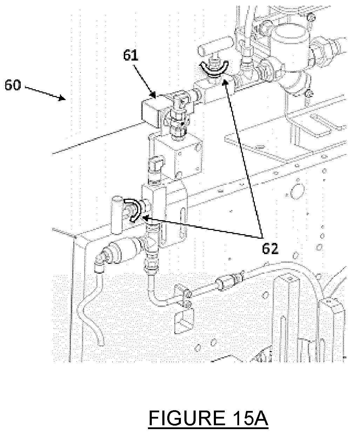

In **Figures 15A-15C****,** the blowing system 60 is shown, which is applied on the pusher base 53. The function of this element is to prevent tuna remains from sticking to the pusher base 53, to prevent the tuna pill from sticking to the pusher when it starts to move back, and thus guarantee a good final appearance of the product. It has a steam injection system installed in the pusher, which can be mixed with compressed air.

In **Figure 15A****,** a possible embodiment of the blowing system 60 is shown, focusing on the activation and regulation mechanisms. In particular, the blowing system 60 represented in this figure comprises a steam inlet solenoid valve 61 and steam inlet regulating means 62.

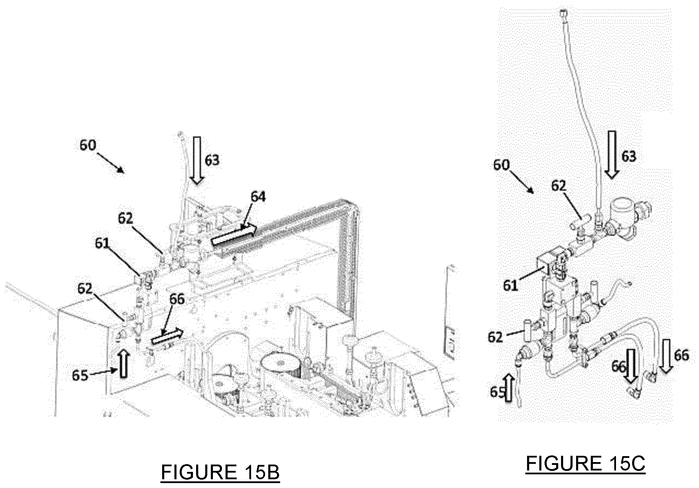

The blowing system 60 includes a steam inlet and an air inlet independently, which come together to blow the pusher. In **Figures 15B** and **15C****,** a general view of the air and steam injection system is shown, which includes a steam inlet 63, a condensate outlet 64, an air inlet 65 and a steam-air mixture 66 that goes to the pusher base 53.

The steam inlet solenoid valve 61 is activated by means of a signal from a detector located on the front of the machine, which injects air and steam at the right time. Blowing is done just before or at the moment when the pusher starts to move back from the can. Both the regulation and the activation or not of the air and steam inlet are configurable by the user through the touch screen 20. The blowing system 60 therefore comprises a steam inlet 63 and an air inlet 65 independently, which are joined to carry out the blowing at the pusher base 53. The entrance of the mixture is governed by the solenoid valve 61 that receives the signal from the blow detector. The regulation of the amount of steam and air is done through two manual valves (steam inlet regulation means 62) installed in the circuit.

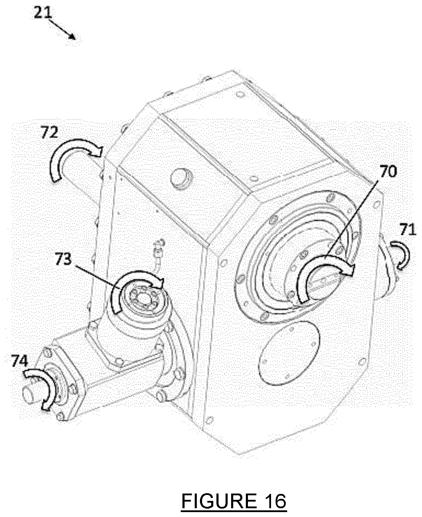

**Figure 16** represents the indexer-reducer assembly 21. It is driven by a geared motor and is responsible for transmitting synchronous movement to the different moving parts of the machine: cutting device 8 (rotating blade) for the tuna pill, star assembly 29, pusher system 11 and jig knife 42. The different gears (pinions, cams, bearings, shafts, seals, etc.) necessary to achieve the desired movements are housed inside the indexer-reducer assembly 21. Figure 16 indicates the elements that correspond to each of the movements: a first movement outlet 70 towards the star assembly 29, a second movement outlet 71 towards the pusher system 11, a movement inlet 72 from the geared motor, a third movement outlet 73 towards the rotary knife, and a fourth movement outlet 74 towards the jig knife 42.

The control unit 13 is configured to dynamically adjust the height of the canned tuna portions (by controlling the pressure and path of the pusher 57) and/or the weight of the canned tuna portions relative to a target weight of packing (by controlling the advancing conveyor system 15). The control unit can be implemented, for example, by means of a computer installed in the location of the machine in communication with the PLC that governs the machine. As inlet/outlet interface for interaction with a user, for example, a touch screen 20 and a keypad can be used. From the screen it is possible to view and configure different operating parameters of the machine (production rate, advancement, speeds, display of weight variation, display of start and stop times, faults, etc.). The button panel may include different functions, such as starting the machine, stopping the machine, resetting the machine after an alarm, and emergency stop, among other functions.

The tuna canning machine 1 may incorporate one or more sensors for measuring the properties of the tuna that is introduced into the packing machine, such as a NIR sensor 26 for measuring the degree of moisture, fat, protein and ash content of the tuna blocks 3, or a temperature sensor 27 that comes into contact with the tuna blocks. According to the example of Figure 4, the temperature measurement is carried out when the tuna blocks have already been compacted by the density control system 5, implemented by means of a set of conveyors. The machine may also include other sensors, such as a vibration sensor 28, located in the indexer-reducer assembly 21, for detecting undesired operation of the machine, according to a vibration pattern.

In the electrical panel 22 the automaton or PLC of the machine is housed, and other electrical and electronic components, such as speed variators. The pneumatic panel 23 houses elements for the control and regulation of the pneumatic elements of the machine, such as the air preparation equipment, filters, solenoid valves, etc.

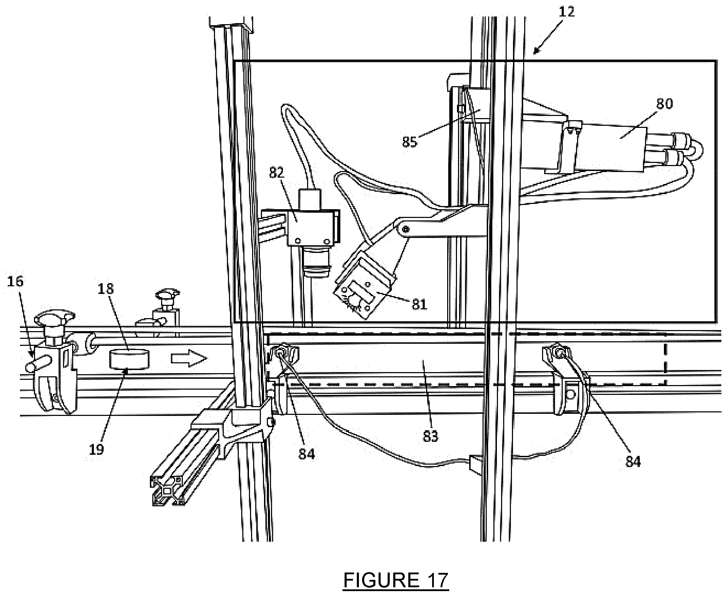

The artificial vision system 12 is located at the outlet of the packing machine (that is, after the stage of filling the empty cans) to capture the appearance characteristics of the manufactured cans. The artificial vision system 12 can be located, for example, on the outlet conveyor system 16, implemented by means of a conveyor belt, as shown in the embodiment of **Figure** 17. The artificial vision system 12 may comprise a laser profile sensor 80 (or laser line sensor, preferably 3D) configured to perform one or more height measurements (or profile detection) of the tuna portion in the can.

The artificial vision system 12 may comprise a lighting system 81, preferably white light, and a color camera 82 (e.g., RGB linear camera) configured to capture color images of the canned tuna portions 18 as they advance through the outlet conveyor system 16. Height measurements and/or image captures are performed in a scanning area 83. One or several presence sensors 84, preferably inductive sensors, are in charge of detecting the filled can 19 of tuna as it passes through the scanning area 83, which allows synchronizing the data capture of the sensors (80,82).

The artificial vision system 12 is configured to detect defects in the canned tuna portions 18 by analyzing the images captured by the color camera 82 and/or by analysis of height measurements made by the laser profile sensor 80. For the analysis of the images and profiles obtained by the artificial vision system 12, a data processing unit 85 is required, implemented for example by means of a processor or a computer with sufficient processing capacity to apply artificial vision algorithms.

The artificial vision system 12 may be configured to calculate an average height, a maximum height and/or a minimum height of the canned tuna portions in one or several regions of interest. The laser profile sensor 80 typically has sufficient processing capacity to obtain certain parameters, including the calculation of average, maximum, and minimum heights of the profile. Alternatively, calculations may be performed by the data processing unit 85 itself.

The data processing unit 85 may be located close to the scanning area 83, as illustrated in the example of Figure 17, in communication with the control unit 13. Alternatively, the data processing unit 85 could be located in a remote area, and could even form part of the control unit 13 itself; that is, if the control unit 13 is implemented for example with a processor-based computer, the data processing unit 85 of the artificial vision system 12 could be the control unit computer itself.

The artificial vision system 12 may be used to self-adjust the appearance of the tuna inside the can at the outlet of the packing machine, so that the height of the pill is uniform over the entire surface (packaging homogeneity), with a certain size (package height) and avoiding unwanted effects such as the existence of tuna side skirts. This automatic quality control is achieved by means of the self-adjustment, by the control unit 13, of the pressure and path carried out by the pusher 57 at the moment of introducing the tuna into the can, increasing or reducing them, depending on the characteristics mentioned of heights and/or skirts detected by the artificial vision system 12.

Undesired appearance effects occur when either the path of the pusher 57 from the initial to the final position, reached when the introduction of the tuna into the can is complete, or the pressure exerted by the pusher 57, are not suitable. If any of them (pressure and/or path of the pusher 57) is insufficient, an uneven surface may result, being the height of the tuna pill in the can inconstant over the entire surface. On the other hand, if any of them is greater than what would be optimal, the tuna will expand towards the sides of the can, thus appearing the so-called skirts, that is, a higher height of the tuna mass at the edges of the can than in the rest of it, due to an excess of path in the pusher 57.

The process by which the self-adjustment of the pressure and path of the pusher 57 is achieved may be carried out according to the following process:
- First, the installed artificial vision system 12 includes a profiler or laser profile sensor 80. Optionally, it can include a color camera 82; however, the chamber is preferably not used for self-adjustment of pressure and path of the pusher 57. The laser profiler sensor 80 is installed on a frame located above the can outlet conveyor so that all cans pass under the profiler.
- The system is synchronized, both the control unit 13 and the color camera 82 and the laser profile sensor 80 have the encoder signal from the conveyor belt that allows managing acquisition and action in a coordinated manner. In addition, the system captures images and profiles of cans at the same rate as packaging, so that each and every can is analyzed. The information provided by these images is continuously processed and transmitted to the control unit 13 of the machine so that it gives the appropriate response continuously.
- The laser profile sensor 80 is responsible for:
   ∘ Obtaining the average, maximum and minimum height of each can. To do this, a first region of interest (ROI) is previously defined, which is the area of the can on which these heights are desired, preferably the entire central area of the can.
   ∘ Obtaining values of maximum and minimum heights at the edges for the detection of possible skirts in a second region of interest. For this, the second region of interest is given by a concentric ring on the edge of the can, of a certain width where the metrics are to be obtained.
- The laser profile sensor 80 sends to the control unit 13, for example through the MODBUS TCP protocol, the height values obtained from each can and the control unit 13 processes it to decide if these values are suitable.
- The control unit 13 decides if the height of the tuna portion in the can is suitable, for example if the average height is a suitable height or meets a target height. The target height of the tuna pill may be entered by the user through the screen 20 of the control unit 13 as a target value.
- If an excess presence of tuna is detected on the edges (skirts), the control unit 13 decides that the heights obtained in that area are higher than desired, and in that case, it sends the order to reduce the pressure and/or the path of the pusher 57.
- When the control unit 13 receives the data on the average, maximum and minimum heights, it then makes decisions regarding the modification of the path and the pneumatic pressure exerted by the pusher. The adjustment of both parameters on the machine may be done using a linear actuator. Conversions between the difference between the average height and the target height and the value to be added or subtracted from both the path and the actual pusher pressure may be done using empirical multiplicative factors.

In one embodiment, the artificial vision system 12 is configured to calculate an average height of the tuna portion in a first region of interest, the control unit 13 being configured to control the pressure and path of the pusher 57 based on at least the calculated average height. Alternatively, or additionally, the artificial vision system 12 may be configured to detect tuna skirts at the edge of the can by obtaining a maximum height and a minimum height in a second region of interest (e.g., the outer perimeter of the portions of canned tuna), where the control unit 13 is configured to control the pressure and the path of the pusher 57 depending on at least the tuna skirts detected. Control of the pressure and path of the pusher 57 may be performed as a function of the average height in the first region of interest in combination with the tuna skirts detected in the second region of interest.

Color camera 82 may be used for defect detection. One of the most common defects in tuna cans is the presence of tuna dark meat. In one embodiment, the artificial vision system 12 is configured to detect the presence of tuna dark meat in the canned tuna portions by analyzing the levels of the red component in the pixels of the captured images.

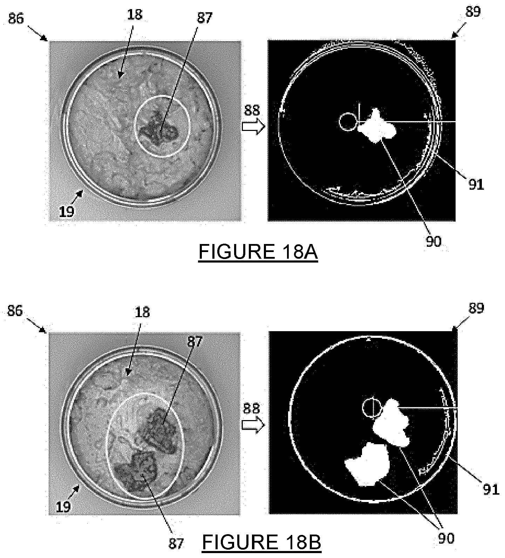

In **Figures 18A** and **18B****,** two examples of tuna dark meat detection in canned tuna portions are shown 18. To do this, the color camera 82 acquires, using a presence sensor 84 that detects the filled can 19 at the entrance to the scanning area 83, a color image 86 containing the canned tuna portion 18, which in the examples contains one tuna dark meat 87 (Figure 18A) or two tuna dark meats 87 (Figure 18B). The artificial vision system 12 processes the captured image 86, analyzing the level of the red component in the image 86. For example, the artificial vision system 12 may carry out a segmentation process 88, such as a binary segmentation by thresholding based on the value of the red component in the image pixels 86, obtaining a segmented image 89, where they are represented in black those pixels with a red component below a certain threshold, and where white pixels have a red component above said threshold. If, in the segmented image 89, one or more sets 90 of white pixels (that is, contiguous pixels that form a set) are found in an area outside the edge 91 of the can (for example, at some distance from the edge 91), it may be considered that each set 90 of white pixels corresponds to a different tuna dark meat 87 . It can also be considered a tuna dark meat 87 depending on the size of the set 90 of white pixels; for example, to determine that the set 90 of white pixels corresponds to a tuna dark meat 87, it may be required that the set 90 of white pixels contain a certain minimum number of pixels.

The color camera 82 may also be used for the detection of other defects, such as the presence of foreign objects on the surface or areas of dark color.

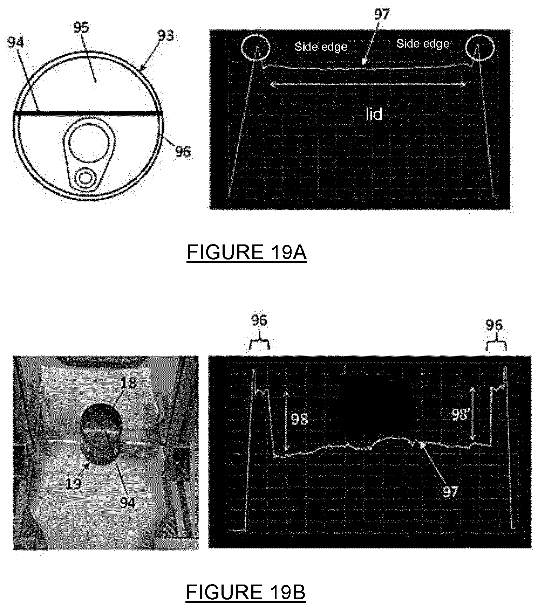

In **Figures 19A-19E****,** profiles obtained by the laser profile sensor 80 are observed in different cases, where it can be seen how the edges and limits of the can are detected, as well as the nonhomogeneous packaging surfaces.

In **Figure 19A****,** the profile obtained by the laser profile sensor 80 when applied to a sealed can 93 with a lid 95 is shown. Sampling line 94 corresponds to a moment when the sensor reads the profile of the can. On the right side of the image the profile 97 or the heights measured along the sampling line 94 are represented, where the peak on the edge corresponds to the lateral edge 96 of the can and the rest to the lid 95 of the can. This preliminary measurement may be used for the detection of the edges of the can.

**Figure 19B** represents the measurement of the profile of a canned tuna portion 18, obtained from above at a position where the laser profile sensor 80 points to the top of the filled can 19. The image on the right represents the profile 97 or packing heights, which are quite homogeneous throughout the entire sampling line 94, with the exception of the ends, which are not considered as they correspond to the lateral edges 96 of the can. The packaging heights (98, 98') on the left and right, side edges are very similar, this homogeneity contributing to a good appearance of the product, as long as said heights (98, 98') are not too large, because in that case the can would give the impression of being a little empty.

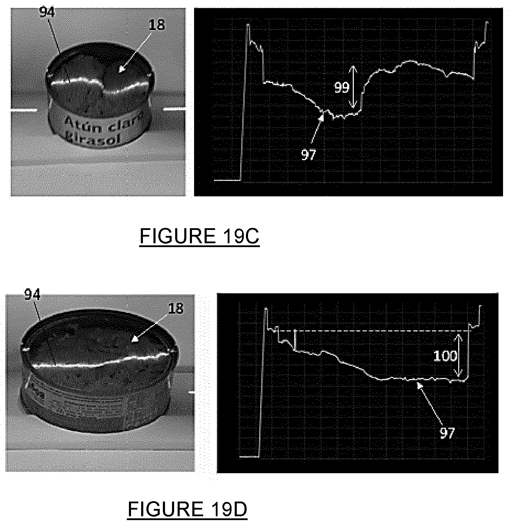

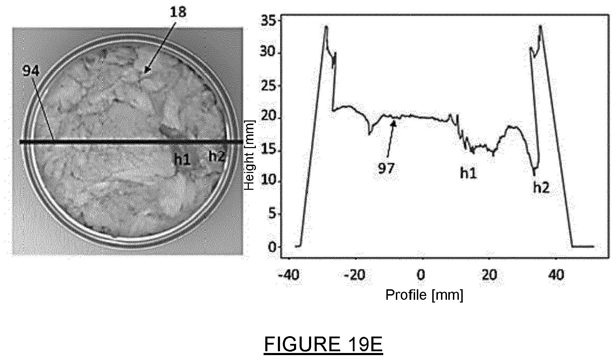

Two examples of inhomogeneous packing profiles are shown in Figures 19C-19E. In the case of the **Figure 19C****,** the profile 97 shows a step 99 or sharp jump in height in the middle part of the can, which generates a negative appearance in the can. In the **Figure 19D****,** the profile 97 has a continuous drop from the left edge to the right edge, there being a significant height difference 100 between both edges, which also creates a poor appearance on the can. In **Figure 19E****,** a can profile 97 with holes (h1, h2) in the packaging is shown. The holes (h1, h2) may be detected by detecting valleys (negative peaks) or abrupt changes in height in the profile 97 in specific areas.

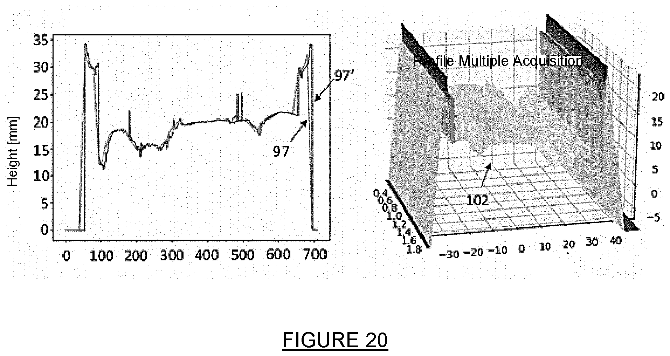

The artificial vision system 12 can be configured to obtain a profile 97 of each can at a certain instant, preferably coinciding with the instant in which the sampling line 94 coincides with the diameter of the can, as shown in the example of Figure 19E. Alternatively, the artificial vision system 12 may be configured to obtain multiple profiles 97 of each can, at different moments in time, which can be used to obtain a three-dimensional profile of the can, the accuracy of which will depend on the proximity of the sampling time instants. In **Figure 20****,** a 3D profile 102 of a canned tuna portion 18 is shown, generated by superimposing different profiles (97, 97',...) obtained consecutively in a filled can 19, at successive instants of time as the can advances along the sampling line 94 of the laser profile sensor 80. Control of pressure and path of the pusher can be performed based on height measurements for a single profile 97 of a can, multiple profiles (e.g., 3D profile 102) of a can, or profiles 97 obtained from multiple consecutive cans. For example, it is possible to obtain an average height of tuna in a can, or the average height of tuna in multiple consecutive cans.

The analysis of the heights measured by the laser profile sensor 80 may be used to detect defects, such as inhomogeneity in the packaging profile 97, the presence of steps 99, the existence of large differences in heights 100 between the edges of the can, the existence of holes (h1, h2) in the tuna or an insufficient average packing height, or tuna remains on the edge of the can that prevent a correct sealing of the can.

The artificial vision system 12 may be used for the decision on the acceptance or rejection of the can, depending on the defect (or defects) detected. In one embodiment, the control unit 13 is configured to send the cans with at least one certain defect to a rejection line.

The information supplied by the dynamic weigher 17 can also be used to decide the acceptance or rejection of the can. In one embodiment, the tuna canning machine 1 is configured to send to a rejection line the filled cans 19 containing the canned tuna portions 18 weighing less than a target packing weight. The delivery to the rejection line may be controlled by the dynamic weigher 17 or by the control unit 13.

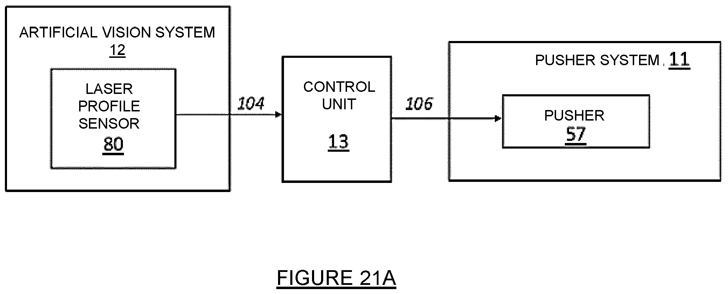

In **Figure 21A****,** a schematic block diagram of the tuna canning machine 1 is shown showing the main control inlets and outlets of the control unit 13 according to an embodiment that includes an automatic quality control of the height of the canned tuna portions 18. The control unit 13 receives height measurements 104 of the canned tuna portions 18 made by the artificial vision system 12, where the height measurements 104 may comprise for example any of those listed in Figures 19 and 20, including maximum heights, minimum heights and/or average heights in one or several regions of interest. The control unit 13 performs a control of the pressure and path 106 of the pusher 57 based on said height measurements 104, thereby dynamically adjusting the height of the tuna portions 18 in the filled can 19.

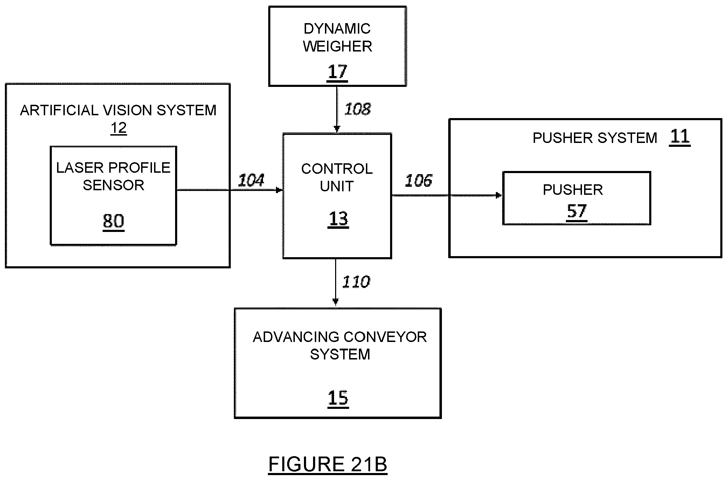

In **Figure 21B****,** a schematic diagram of the control performed by the control unit 13 according to another embodiment is shown, which includes an automatic quality control of the height and weights of the canned tuna portions 18. The dynamic weigher 17 obtains the weights 108 of the canned tuna portions 18 and sends them to the control unit 13, which performs a control of the intermittent start and stop movement of the advancing conveyor system 15 in order to dynamically adjust the weights 108 of the canned tuna portions 18 with respect to a target packing weight. The corrected advancement 110 is the outlet of the control unit 13 resulting from the adjustment automatically calculated starting from the weights 108 obtained by the dynamic weigher 17.

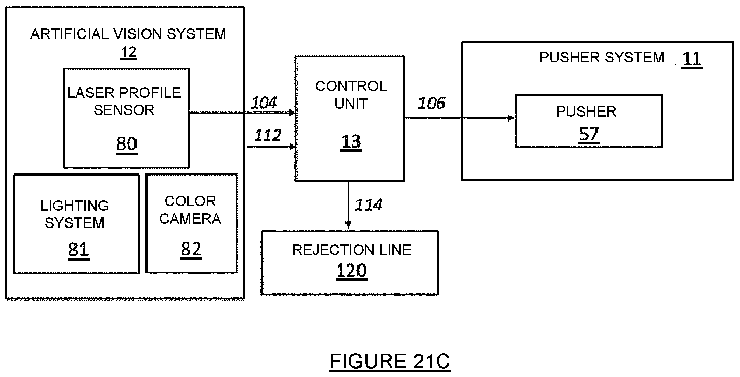

In **Figure 21C****,** a schematic diagram of the control carried out by the control unit 13 according to another embodiment is shown, which includes an automatic quality control of the height of the canned tuna portions 18 and in which an automatic rejection of cans with defects is incorporated. For this, the artificial vision system 12 includes a lighting system 81 and a color camera 82 configured to capture images 86 of the canned tuna portions 18. The artificial vision system 12 is configured to detect defects 112 in the canned tuna portions 18 by analyzing the images 86 captured by the color camera 82 and/or by the analysis of the height measurements 104 made by the laser profile sensor 80. The control unit 13 is in charge of sending a control order 114 to a rejection line 120 in order to automatically direct the filled cans 19 that include the canned tuna portions 18 with at least one certain defect 112 to said rejection line 120, which can form part of the outlet conveyor system 16. Likewise, the control unit 13, or the dynamic weigher 17 itself, may be configured to send to the rejection line 120 the filled cans 19 that include the canned tuna portions 18 with a certain weight below the target packaging weight.

## Claims

1. A tuna canning machine with automatic quality control, comprising:
a feeding conveyor system (2) configured to receive and transport tuna blocks (3);
a density control system (5) configured to compact the tuna blocks (3);
a nozzle (7) configured to shape the compacted tuna blocks;
a cutting device (8) configured to obtain tuna portions from the shaped tuna blocks;
a feeding system of empty cans (10);
a pusher system (11) comprising a pusher (57) configured to introduce the tuna portions into the empty cans (9) according to an adjustable pressure and path;
**characterized in that** the tuna canning machine (1) comprises:
an artificial vision system (12) configured to make height measurements (104) of the canned tuna portions (18); and
a control unit (13) configured to dynamically adjust the height of the canned tuna portions by controlling the pressure and path (106) of the pusher (57) based on the height measurements (104) of the canned tuna portions (18).

2. The machine according to claim 1, wherein the artificial vision system comprises a laser profile sensor (80) configured to perform height measurements (104).

3. The machine according to claim 2, wherein the artificial vision system (12) is configured to detect defects (112) in the canned tuna portions (18) by analyzing the height measurements (104) made by the profile sensor laser (80).

4. The machine according to any of the preceding claims, wherein the artificial vision system (12) comprises a lighting system (81) and a color camera (82) configured to capture images (86) of the canned tuna portions (18).

5. The machine according to claim 4, wherein the artificial vision system (12) is configured to detect defects (112) in the canned tuna portions (18) by analyzing the images (86) captured by the color camera (82).

6. The machine according to claim 5, where the artificial vision system (12) is configured to detect the presence of tuna dark meat (87) in the canned tuna portions (18) by analyzing the levels of the red component in the pixels of the images (86) captured.

7. The machine according to any of claims 5 to 6, wherein the artificial vision system (12) is configured to detect at least one of the following defects in the canned tuna portions (18):
the presence of foreign objects on the surface;
dark colored areas;
the existence of holes (h1, h2);
rests of tuna on the edge of the can that prevent a correct sealing of the can.

8. The machine according to any of claims 5 to 7, wherein the control unit (13) is configured to send to a rejection line (120) to the filled cans (19) that include the canned tuna portions (18) with at least one certain defect (112).

9. The machine according to any of the preceding claims, wherein the artificial vision system (12) is configured to calculate an average height of the canned tuna portions (18) in a first region of interest;
and wherein the control unit (13) is configured to control the pressure and the path of the pusher (57) based on at least the calculated average height.

10. The machine according to claim 9, wherein the artificial vision system (12) is configured to calculate a maximum height and/or a minimum height of the canned tuna portions (18) in a second region of interest.

11. The machine according to claim 10, wherein the artificial vision system (12) is configured to detect tuna skirts on the edge of the can by obtaining a maximum height and a minimum height on the outer perimeter of the canned tuna portions. (18);
and where the control unit (13) is configured to control the pressure and the path of the pusher (57) depending on at least the tuna skirts detected.

12. The machine according to any of the preceding claims, wherein the pusher (57) has a base (53) adapted to the shape of the can and through which the pusher (57) contacts the tuna portion, wherein the pusher base (53) has perforations (58) made;
and where the tuna canning machine (1) comprises a blowing system (60) configured to inject air and/or steam through the perforations (58) in the pusher base (53) at the start of the return movement of the pusher (57).

13. The machine according to any of the preceding claims, comprising:
an advancing conveyor system (15) for the tuna blocks (3) configured to move the compacted tuna blocks towards the nozzle (7) by means of an intermittent advancement;
an outlet conveyor system (16) configured to receive and transport the canned tuna portions (18); and
a dynamic weigher (17) configured to obtain the weights (108) of the canned tuna portions (18);
and wherein the control unit is configured to dynamically adjust the weights (108) of the canned tuna portions (18) with respect to a target packing weight by controlling the advancement (110) of the advancing conveyor system (15).

14. The machine according to claim 13, which is configured to send to a rejection line (120) the filled cans (19) that include the canned tuna portions (18) with a certain weight below the target packaging weight.

## Patentansprüche

1. Thunfischkonservenmaschine mit automatischer Qualitätskontrolle, umfassend:
ein Zuführungsförderersystem (2), das dazu konfiguriert ist, Thunfischblöcke (3) zu empfangen und zu befördern;
ein Dichtekontrollsystem (5), das dazu konfiguriert ist, die Thunfischblöcke (3) zu kompaktieren;
eine Düse (7), die dazu konfiguriert ist, die kompaktierten Thunfischblöcke zu formen;
eine Schneidevorrichtung (8), die dazu konfiguriert ist, Thunfischportionen aus den geformten Thunfischblöcken zu erhalten;
ein Zuführungssystem für leere Dosen (10);
ein Schiebesystem (11), umfassend einen Schieber (57), der dazu konfiguriert ist, die Thunfischportionen in die leeren Dosen (9) gemäß einem einstellbaren Druck und Pfad einzuführen;
**dadurch gekennzeichnet, dass** die Thunfischkonservenmaschine (1) Folgendes umfasst:
ein System für künstliches Sehen (12), das dazu konfiguriert ist, Höhenmessungen (104) der eingedosten Thunfischportionen (18) vorzunehmen; und
eine Kontrolleinheit (13), die dazu konfiguriert ist, die Höhe der eingedosten Thunfischportionen durch Kontrollieren des Drucks und des Pfads (106) des Schiebers (57) basierend auf den Höhenmessungen (104) der eingedosten Thunfischportionen (18) dynamisch einzustellen.

2. Maschine gemäß Anspruch 1, wobei das System für künstliches Sehen einen Laserprofilsensor (80) umfasst, der dazu konfiguriert ist, Höhenmessungen (104) durchzuführen.

3. Maschine gemäß Anspruch 2, wobei das System für künstliches Sehen (12) dazu konfiguriert ist, Mängel (112) in den eingedosten Thunfischabschnitten (18) zu erkennen, indem es die Höhenmessungen (104) analysiert, die von dem Profilsensorlaser (80) vorgenommen werden.

4. Maschine gemäß einem der vorhergehenden Ansprüche, wobei das System für künstliches Sehen (12) ein Beleuchtungssystem (81) und eine Farbkamera (82) umfasst, die dazu konfiguriert ist, Bilder (86) der eingedosten Thunfischportionen (18) aufzunehmen.

5. Maschine gemäß Anspruch 4, wobei das System für künstliches Sehen (12) dazu konfiguriert ist, Mängel (112) in den eingedosten Thunfischportionen (18) zu erkennen, indem es die von der Farbkamera (82) aufgenommenen Bilder (86) analysiert.

6. Maschine gemäß Anspruch 5, wobei das System für künstliches Sehen (12) dazu konfiguriert ist, die Anwesenheit von dunklem Thunfischfleisch (87) in den eingedosten Thunfischportionen (18) zu erkennen, indem die Anteile der Rotkomponente in den Pixeln der aufgenommenen Bilder (86) analysiert werden.

7. Maschine gemäß einem der Ansprüche 5 bis 6, wobei das System für künstliches Sehen (12) dazu konfiguriert ist, mindestens einen der folgenden Mängel in den eingedosten Thunfischportionen (18) zu erkennen:
die Anwesenheit von Fremdkörpern auf der Oberfläche;
dunkel gefärbte Flächen;
das Vorhandensein von Lücken (h1, h2);
Thunfischreste an der Kante der Dose, die ein korrektes Abdichten der Dose verhindern.

8. Maschine gemäß einem der Ansprüche 5 bis 7, wobei die Kontrolleinheit (13) dazu konfiguriert ist, die gefüllten Dosen (19), welche die eingedosten Thunfischportionen (18) mit mindestens einem gewissen Mangel (112) beinhalten, an eine Rückweisungslinie (120) zu senden.

9. Maschine gemäß einem der vorhergehenden Ansprüche, wobei das System für künstliches Sehen (12) dazu konfiguriert ist, eine Durchschnittshöhe der eingedosten Thunfischabschnitte (18) in einem ersten Bereich von Interesse zu berechnen;
und wobei die Kontrolleinheit (13) dazu konfiguriert ist, den Druck und den Pfad des Schiebers (57) basierend auf mindestens der berechneten Durchschnittshöhe zu steuern.

10. Maschine gemäß Anspruch 9, wobei das System für künstliches Sehen (12) dazu konfiguriert ist, eine maximale Höhe und/oder eine minimale Höhe der eingedosten Thunfischportionen (18) in einem zweiten Bereich von Interesse zu berechnen.

11. Maschine gemäß Anspruch 10, wobei das System für künstliches Sehen (12) dazu konfiguriert ist, Thunfischschürzen an der Kante der Dose zu erkennen, indem es eine maximale Höhe und eine minimale Höhe an dem Außenumfang der eingedosten Thunfischportionen erhält (18);
und wo die Kontrolleinheit (13) dazu konfiguriert ist, den Druck und den Pfad des Schiebers (57) in Abhängigkeit von mindestens den erkannten Thunfischschürzen zu kontrollieren.

12. Maschine gemäß einem der vorhergehenden Ansprüche, wobei der Schieber (57) eine Basis (53) aufweist, die an die Form der Dose angepasst ist und durch die der Schieber (57) mit der Thunfischportion kontaktiert, wobei die Schieberbasis (53) erzeugte Perforationen (58) aufweist;
und wo die Thunfischkonservenmaschine (1) ein Blassystem (60) umfasst, das dazu konfiguriert ist, Luft und/oder Dampf durch die Perforationen (58) in der Schieberbasis (53) zu Beginn der Rückführbewegung des Schiebers (57) zu injizieren.

13. Maschine gemäß einem der vorhergehenden Ansprüche, umfassend:
ein Vorschubförderersystem (15) für die Thunfischblöcke (3), das dazu konfiguriert ist, die kompaktierten Thunfischblöcke mittels eines intermittierenden Vorschubs in Richtung der Düse (7) zu bewegen;
ein Auslassförderersystem (16), das dazu konfiguriert ist, die eingedosten Thunfischabschnitte (18) zu empfangen und zu befördern; und
eine dynamische Waage (17), die dazu konfiguriert ist, die Gewichte (108) der eingedosten Thunfischportionen (18) zu erhalten;
und wobei die Kontrolleinheit dazu konfiguriert ist, die Gewichte (108) der eingedosten Thunfischportionen (18) in Bezug auf ein Zielpackungsgewicht dynamisch einzustellen, indem sie den Vorschub (110) des Vorschubförderersystems (15) kontrolliert.

14. Maschine gemäß Anspruch 13, die dazu konfiguriert ist, die gefüllten Dosen (19), welche die eingedosten Thunfischportionen (18) mit einem gewissen Gewicht unterhalb des Zielverpackungsgewichts beinhalten, an eine Rückweisungslinie (120) zu senden.

## Revendications

1. Une machine de mise en conserve du thon avec contrôle automatique de la qualité, comprenant :
un système de convoyeur d'alimentation (2) configuré pour recevoir et transporter des blocs de thon (3) ;
un système de contrôle de la densité (5) configuré pour compacter les blocs de thon (3) ;
une buse (7) configurée pour façonner les blocs de thon compactés ;
un dispositif de découpe (8) configuré pour obtenir des portions de thon à partir des blocs de thon façonnés ;
un système d'alimentation de boîtes de conserve vides (10) ;
un système de poussoir (11) comprenant un poussoir (57) configuré pour introduire les portions de thon dans les boîtes vides (9) selon une pression et une trajectoire réglables ;
**caractérisé en ce que** la machine de mise en conserve du thon comprend en outre :
un système de vision artificielle (12) configuré pour effectuer des mesures de hauteur (104) des portions de thon en conserve (18) ; et
une unité de commande (13) configurée pour ajuster dynamiquement la hauteur des portions de thon en conserve en contrôlant la pression et la trajectoire (106) du poussoir (57) sur la base des mesures de hauteur (104) des portions de thon en conserve (18).

2. Machine selon la revendication 1, dans laquelle le système de vision artificielle comprend un capteur de profil laser (80) configuré pour effectuer des mesures de hauteur (104).

3. Machine selon la revendication 2, dans laquelle le système de vision artificielle (12) est configuré pour détecter des défauts (112) dans les portions de thon en conserve (18) en analysant les mesures de hauteur (104) effectuées par le laser du capteur de profil (80).

4. Machine selon l'une des revendications précédentes, dans laquelle le système de vision artificielle (12) comprend un système d'éclairage (81) et une caméra couleur (82) configurés pour capturer des images (86) de portions de thon en conserve (18).

5. Machine selon la revendication 4, dans laquelle le système de vision artificielle (12) est configuré pour détecter les défauts (112) dans les portions de thon en conserve (18) en analysant les images (86) capturées par la caméra couleur (82).

6. Machine selon la revendication 5, où le système de vision artificielle (12) est configuré pour détecter la présence de viande brune de thon (87) dans les portions de thon en conserve (18) en analysant les niveaux de la composante rouge dans les pixels des images (86) capturées.

7. Machine selon l'une des revendications 5 à 6, dans laquelle le système de vision artificielle (12) est configuré pour détecter au moins l'un des défauts suivants dans les portions de thon en conserve (18) :
la présence de corps étrangers sur la surface ;
les zones de couleur foncée ;
l'existence de trous (h1, h2) ;
des restes de thon sur le bord de la boîte qui empêchent une fermeture correcte de la boîte.

8. Machine selon l'une des revendications 5 à 7, dans laquelle l'unité de contrôle (13) est configurée pour envoyer vers une ligne de rejet (120) les boîtes remplies (19) qui comprennent les portions de thon en conserve (18) présentant au moins un certain défaut (112).

9. Machine selon l'une des revendications précédentes, dans laquelle le système de vision artificielle (12) est configuré pour calculer une hauteur moyenne des portions de thon en conserve (18) dans une première région d'intérêt ;
et dans lequel l'unité de commande (13) est configurée pour contrôler la pression et la trajectoire du poussoir (57) sur la base d'au moins la hauteur moyenne calculée.

10. Machine selon la revendication 9, dans laquelle le système de vision artificielle (12) est configuré pour calculer une hauteur maximale et/ou une hauteur minimale des portions de thon en conserve (18) dans une deuxième région d'intérêt.

11. Machine selon la revendication 10, dans laquelle le système de vision artificielle (12) est configuré pour détecter les jupes de thon sur le bord de la boîte en obtenant une hauteur maximale et une hauteur minimale sur le périmètre extérieur des portions de thon en conserve. (18) ;
et où l'unité de commande (13) est configurée pour contrôler la pression et la trajectoire du poussoir (57) en fonction d'au moins les jupes de thon détectées.

12. Machine selon l'une des revendications précédentes, dans laquelle le poussoir (57) a une base (53) adaptée à la forme de la boîte et à travers laquelle le poussoir (57) entre en contact avec la portion de thon, dans laquelle la base du poussoir (53) comporte des perforations (58) ;
et où la machine à conserver le thon (1) comprend un système de soufflage (60) configuré pour injecter de l'air et/ou de la vapeur à travers les perforations (58) de la base du poussoir (53) au début du mouvement de retour du poussoir (57).

13. Machine selon l'une des revendications précédentes, comprenant :
un système de convoyeur d'avancement (15) pour les blocs de thon (3) configuré pour déplacer les blocs de thon compactés vers la buse (7) au moyen d'un avancement intermittent ;
un système de convoyeur de sortie (16) configuré pour recevoir et transporter les portions de thon en conserve (18) ; et
une peseuse dynamique (17) configurée pour obtenir les poids (108) des portions de thon en conserve (18) ;
et dans lequel l'unité de commande est configurée pour ajuster dynamiquement les poids (108) des portions de thon en conserve (18) par rapport à un poids d'emballage cible en contrôlant l'avancement (110) du système de convoyeur d'avancement (15).

14. Machine selon la revendication 13, qui est configurée pour envoyer vers une ligne de rejet (120) les boîtes remplies (19) qui comprennent les portions de thon en conserve (18) avec un certain poids inférieur au poids d'emballage cible.
